# EUROPÄISCHE PATENTANMELDUNG

(11) **EP 4 624 259 A1**
(43) Veröffentlichungstag der Anmeldung: **01.10.2025**
(21) Anmeldenummer: 25163226.1
(22) Anmeldetag: 12.03.2025
(51) Int. Cl.: B60R 5/04

(54) **ROLLOVORRICHTUNG**

(30) Priorität: 25.03.2024 DE 102024108449
(71) Anmelder: FKT GmbH, 85104 Pförring (DE)
(72) Erfinder: Günthner, Guido, 85104 Pförring/Lobsing (DE); Regler, Michael, 85095 Denkendorf (DE)
(74) Vertreter: Canzler & Bergmeier Patentanwälte Partnerschaft mbB

(57) **Zusammenfassung**

Eine Rollovorrichtung (1) für ein Kraftfahrzeug (2), insbesondere Rollovorrichtung (1) zum Abtrennen eines Laderaums (3) eines Kraftfahrzeugs (2), weist ein Wickelrohr (4), eine auf das Wickelrohr (4) aufwickelbare Rollobahn (5), ein Gehäuse (6), in welchem das Wickelrohr (4) aufgenommen ist, sowie eine innerhalb des Wickelrohres (4) spannbar angeordnete Spiralfeder (7) auf, deren eines Ende (8) drehfest mit dem Wickelrohr (4) verbunden ist und deren anderes Ende (8) drehbar in dem Wickelrohr (4) aufgenommen ist. Das Gehäuse (6) weist zwei Endstücke (9) auf, an welchen das Wickelrohr (4) um seine Längsachse (10) drehbar gelagert ist, wobei ein erstes Endstück (9) dem drehbaren Ende (8) der Spiralfeder (7) zugewandt ist und ein zweites Endstück (9) dem drehfesten Ende (8) der Spiralfeder (7) zugewandt ist. Die Rollovorrichtung (1) weist ein Spannelement (11) zum Vorspannen der Spiralfeder (7) auf, welches von außen durch das erste Endstück (9) des Gehäuses (6) hindurch betätigbar ist.

## Beschreibung

Die vorliegende Erfindung betrifft eine Rollovorrichtung für ein Kraftfahrzeug, insbesondere eine Rollovorrichtung zum Abtrennen eines Laderaums eines Kraftfahrzeugs, mit einem Wickelrohr, mit einer auf das Wickelrohr aufwickelbaren Rollobahn, mit einem Gehäuse, in welchem das Wickelrohr aufgenommen ist, sowie mit einer innerhalb des Wickelrohres spannbar angeordneten Spiralfeder, deren eines Ende drehfest mit dem Wickelrohr verbunden ist und deren anderes Ende drehbar in dem Wickelrohr aufgenommen ist. Das Gehäuse weist dabei zwei Endstücke auf, an welchen das Wickelrohr um seine Längsachse drehbar gelagert ist. Dabei ist ein erstes Endstück dem drehbaren Ende der Spiralfeder zugewandt und ein zweites Endstück dem drehfesten Ende der Spiralfeder zugewandt.

Aus der DE 695 00503 T2 ist eine Rollovorrichtung für ein Kraftfahrzeug bekannt, bei welcher ein Wickelrohr drehbar in einem Gehäuse aufgenommen ist. In dem Wickelrohr ist eine Torsionsfeder angeordnet. Diese ist an ihrem einem Ende drehfest mit einem in das Wickelrohr eingepressten Stopfen verbunden. Das Wickelrohr selbst ist an diesem Ende drehbar in dem Gehäuse gelagert. Am anderen Ende des Wickelrohres ist das andere Ende der Torsionsfeder ebenfalls mit einem Stopfen verbunden, welcher jedoch drehfest mit dem Gehäuse verbunden ist. Das Wickelrohr ist an diesem Ende relativ zu dem Stopfen, den sie umgibt, drehbar. Hierdurch kann sich das Wickelrohr einerseits frei in dem Gehäuse drehen, wobei jedoch durch die drehfeste Verbindung der Torsionsfeder einerseits mit dem Wickelrohr und andererseits mit dem Gehäuse die Torsionsfeder beim Abwickeln der Rollobahn gespannt wird und zum Aufwickeln der Rollobahn als Federmotor wirkt. Um bei einer solchen Rollovorrichtung die Geräuschentwicklung durch die Feder zu vermindern, weist die Federabschnitte mit eng aneinanderliegenden Schraubenwendungen und Abschnitte mit nicht aneinanderliegenden Schraubenbindungen auf. Das Verbinden der Stopfen mit der Torsionsfeder ist dabei vergleichsweise aufwendig und kraftintensiv.

Aus der DE 601 05 073 T2 ist ebenfalls eine solche Rollovorrichtung bekannt. Um die Montage der Rollovorrichtung zu erleichtern, weist dabei mindestens ein Ende der Feder mindestens eine nicht kreisförmige Windung auf. Die Stopfen, welche die Feder halten, weisen eine zu dieser nicht kreisförmige Hinwendung komplementäre Kontur auf. Die Stopfen können hierdurch einfach mit der Feder verbunden werden, indem die mindestens eine nicht kreisförmige Windung und die dazu komplementäre Kontur der Stopfen ineinandergeschoben werden. Um die Rollovorrichtung zu montieren, muss zunächst das Wickelrohr mit der Feder vormontiert werden und die Feder vorgespannt werden. Sodann wird das Wickelrohr mit der vorgespannten Feder in das Gehäuse eingesetzt und mit dem Gehäuse verbunden.

Aufgabe der vorliegenden Erfindung ist es, eine Rollovorrichtung vorzuschlagen, welche die Montage der Rollovorrichtung weiter erleichtert. Weiterhin soll ein entsprechendes Verfahren vorgeschlagen werden.

Die Aufgabe wird gelöst durch eine Rollovorrichtung und ein Verfahren zur Herstellung einer Rollovorrichtung mit den Merkmalen der unabhängigen Patentansprüche.

Eine Rollovorrichtung für ein Kraftfahrzeug, insbesondere eine Rollovorrichtung zum Abtrennen eines Laderaums eines Kraftfahrzeugs, weist ein Wickelrohr, eine auf das Wickelrohr aufwickelbare Rollobahn mit einem Gehäuse, in welchem das Wickelrohr aufgenommen ist, sowie eine innerhalb des Wickelrohres spannbar angeordnete Spiralfeder auf, deren eines Ende drehfest mit dem Wickelrohr verbunden ist und deren anderes Ende drehbar in dem Wickelrohr aufgenommen ist. Das Gehäuse weist zwei Endstücke auf, an welchen das Wickelrohr um seine Längsachse drehbar gelagert ist, wobei ein erstes Endstück dem drehbaren Ende der Spiralfeder zugewandt ist und ein zweites Endstück dem drehfesten Ende der Spiralfeder zugewandt ist. Es wird vorgeschlagen, dass die Rollovorrichtung eine Spannvorrichtung zum Vorspannen der Spiralfeder aufweist, welches von außen durch das erste Endstück des Gehäuses hindurch betätigbar ist, und welches zum Fixieren einer Vorspannung der Spiralfeder an dem ersten Endstück des Gehäuses festlegbar ist, insbesondere formschlüssig festlegbar ist.

Weiterhin wird ein Verfahren zur Herstellung einer solchen Rollovorrichtung vorgeschlagen. Bei dem Verfahren wird eine Spiralfeder spannbar innerhalb des Wickelrohres angeordnet, wobei ein Ende der Spiralfeder drehfest mit dem Wickelrohr verbunden wird und das andere Ende der Spiralfeder drehbar in dem Wickelrohr aufgenommen wird. Das Wickelrohr wird um seine Längsachse drehbar an zwei Endstücken des Gehäuses gelagert, wobei ein erstes Endstück dem drehbaren Ende der Spiralfeder zugewandt ist und ein zweites Endstück dem drehfesten Ende der Spiralfeder zugewandt ist. Dabei wird die Spiralfeder mittels einer Spannvorrichtung von außen durch das erste Endstück des Gehäuses hindurch vorgespannt und nach dem Vorspannen wird die Spannvorrichtung zum Fixieren der Vorspannung der Spiralfeder an dem ersten Endstück des Gehäuses festgelegt, insbesondere formschlüssig festgelegt.

Die Spannvorrichtung dient somit sowohl zum Vorspannen der Spiralfeder, als auch zum Fixieren der Vorspannung. Die Spannvorrichtung wirkt mit dem drehbaren Ende der Spiralfeder zusammen, um diese vorzuspannen. Im Unterschied zu bekannten Rollovorrichtungen des Standes der Technik ist es dadurch, dass die Spannvorrichtung von außen durch das Endstück des Gehäuses hindurch betätigbar ist, möglich, die Spiralfeder auch erst nach der vollständigen Montage der Rollovorrichtung vorzuspannen. Die Montage der Rollovorrichtung ist hierdurch erheblich erleichtert, da alle Teile der Rollovorrichtung spannungsfrei bzw. ohne Federvorspannung miteinander montiert werden können. Es ist nicht mehr erforderlich, das Wickelrohr mit der vorgespannten Feder vorzumontieren und diesen vorgespannten Vormontageumfang dann erst in das Gehäuse zu montieren. Dabei ist es nach einer ersten Ausführung möglich, die Spannvorrichtung fest an dem Endstück festzulegen. Beispielsweise können, je nach Ausführung und Materialien der Spannvorrichtung und des Endstücks, diese nach dem Vorspannen der Spiralfeder miteinander verklebt, verschweißt oder auch miteinander verpresst werden. Besonders vorteilhaft ist es jedoch, wenn die Spannvorrichtung formschlüssig an dem Endstück festlegbar ist. Die Verbindung ist hierdurch lösbar, so dass es hierdurch auch möglich ist, die Spiralfeder beispielsweise für Reparatur- oder Wartungszwecke zu entspannen sowie die Spiralfeder im Betrieb nachzuspannen.

Auch ist es von Vorteil, wenn die Spannvorrichtung einen Drehstab umfasst, welcher in nicht festgelegtem Zustand der Spannvorrichtung drehbar in dem ersten Endstück des Gehäuses angeordnet ist. Die Rollovorrichtung kann hierdurch sehr kompakt ausgeführt werden.

Auch ist es vorteilhaft, wenn der Drehstab einen Verschlussabschnitt aufweist, welcher wenigstens ein erstes Verschlusselement eines Bajonettverschlusses beinhaltet, und wenn das erste Endstück des Gehäuses wenigstens ein mit dem ersten Verschlusselement zusammenwirkendes, zweites Verschlusselement des Bajonettverschlusses aufweist. Bei dem Verfahren ist es entsprechend vorteilhaft, wenn die Spannvorrichtung einen Drehstab umfasst, welcher mittels eines Bajonettverschlusses an dem ersten Endstück des Gehäuses festgelegt wird. Der Drehstab kann hierdurch durch einfaches Drücken in axialer Richtung der Spiralfeder und eine leichte Drehung des Drehstabs mit dem Endstück des Gehäuses verriegelt werden, um die Vorspannung der Spiralfeder zu fixieren. Ebenso einfach kann die Verriegelung des Drehstabs mit dem Endstück wieder aufgehoben werden, um die Vorspannung der Spiralfeder zu lösen oder die Spiralfeder nachzuspannen.

Des Weiteren ist es vorteilhaft, wenn der Drehstab einen Spannabschnitt aufweist, welcher zum Vorspannen und/oder Entspannen der Spiralfeder formschlüssig mit dem drehbaren Ende der Spiralfeder zusammenwirkt. Der Spannabschnitt wirkt dabei in Umfangsrichtung der Spiralfeder mit dem drehbaren Ende der Spiralfeder zusammen. Beispielsweise kann der Spannabschnitt des Drehstabs eine Öse der Spiralfeder umgreifen, um die Spiralfeder vorzuspannen.

Besonders vorteilhaft ist es jedoch, wenn der Spannabschnitt des Drehstabs eine erste Mitnehmerkontur aufweist, welche mit wenigstens einer zweiten Mitnehmerkontur der Spiralfeder zusammenwirkt. Vorzugsweise weist dabei das drehbare Ende der Spiralfeder wenigstens eine Windung auf, welche die zweite Mitnehmerkontur ausbildet. Die Vorspannkraft des Drehstabs kann hierdurch direkt in die Windungen der Spiralfeder eingeleitet werden. Zugleich können die Mitnehmerkontur des Drehstabs und die Mitnehmerkontur der Spiralfeder optimal aufeinander abgestimmt werden, wodurch die Übertragung der Vorspannkraft erleichtert ist.

Weiterhin ist es besonders vorteilhaft, wenn der Spannabschnitt des Drehstabs zum Vorspannen der Spiralfeder von außen durch das Endstück hindurch mit dem drehbaren Ende der Spiralfeder in Eingriff bringbar ist, insbesondere in axialer Richtung der Spiralfeder in die wenigstens eine, die zweite Mitnehmerkontur ausbildende Windung einschiebbar ist. Die gesamte Montage der Rollovorrichtung ist hierdurch in Form eines einfachen Steckprozesses möglich. Ebenso ist es auch bei vollständig montierter Rollovorrichtung noch möglich, den Spannabschnitt des Drehstabs durch ein einfaches Einsetzen in axialer Richtung einzubringen.

Bei dem Verfahren ist es entsprechend vorteilhaft, wenn zum Vorspannen der Spiralfeder ein Spannabschnitt des Drehstabes mit einer ersten Mitnehmerkontur von außen durch das erste Endstück des Gehäuses hindurch mit einer zweiten Mitnehmerkontur des drehbaren Endes der Spiralfeder in Eingriff gebracht wird, insbesondere in axialer Richtung der Spiralfeder in wenigstens eine die zweite Mitnehmerkontur ausbildende Windung der Spiralfeder eingeschoben wird.

Weiterhin ist es vorteilhaft, wenn der Drehstab aus einem Kunststoffmaterial gefertigt ist, insbesondere als Kunststoffspritzgußstück gefertigt ist. Bei dem Verfahren ist es entsprechend vorteilhaft, wenn der Drehstab als Kunststoffspritzgußstück gefertigt wird. Die Spannvorrichtung bzw. der Drehstab kann hierdurch einfach und kostengünstig hergestellt werden.

Vorteilhaft ist es dabei, wenn der Spannabschnitt des Drehstabs mehrere, insbesondere einteilig an den Spannabschnitt angeformte, vorzugsweise in den Spannabschnitt eingekerbte, Rastnasen zum Verrasten der wenigstens einen, die zweite Mitnehmerkontur ausbildenden Windung an dem Spannabschnitt aufweist. Bei dem Verfahren ist es entsprechend vorteilhaft, wenn an den Spannabschnitt des Drehstabs mehrere Rastnasen zum Verrasten der wenigstens einen, die zweite Mitnehmerkontur ausbildenden Windung der Spiralfeder angeformt werden. Es wurde herausgefunden, dass die aneinanderliegenden Federwindungen der Spiralfeder beim Auf- und Abwickeln der Rollobahn sich gegeneinander bewegen, wodurch oftmals unerwünschte Geräusche entstehen. Zugleich nimmt beim Vorspannen der Spiralfeder die Länge der Spiralfeder zu, was ebenfalls zu unerwünschten Geräuschen beitragen kann. Durch die Rastnasen kann die wenigstens eine, die zweite Mitnehmerkontur ausbildende Windung beim ersten Vorspannen der Spiralfeder zugleich in axialer Richtung auseinandergezogen werden. Dies erfolgt in besonders vorteilhafter Weise selbsttätig, da beim Vorspannen die wenigstens eine Windung mit der zweiten Mitnehmerkontur in axialer Richtung der Spiralfeder auf den Drehstab von Rastnase zu Rastnase transportiert wird und hierdurch die Spiralfeder auseinandergezogen wird. Da sich die Längung der Spiralfeder in axialer Richtung der Spiralfeder fortsetzt, weisen die Windungen der Spiralfeder somit nach dem ersten Vorspannen einen geringen axialen Abstand zueinander auf.

Derartige Rastnasen sind nicht nur in Verbindung mit einem Spannabschnitt eines Drehstabs wie hier beschrieben vorteilhaft, sondern können auch in Verbindung mit anderen Stützzapfen bzw. Stopfen zur Lagerung einer Spiralfeder, welche einen Spannabschnitt zum Vorspannen der Feder aufweisen, vorteilhaft eingesetzt werden. Beispielsweise könnten auch bei einem vormontierten Wickelrohr mit darin vorgespannter Spiralfeder wie eingangs beschrieben die Stützzapfen bis bzw. Stopfen mit einem Spannabschnitt mit derartigen Rastnasen versehen werden. Auch hier kann die Spiralfeder dann durch Verdrehen des Spannabschnitt gespannt werden, wobei dadurch wiederum die wenigstens eine, die zweite Mitnehmerkontur ausbildende Windung der Spiralfeder von Rastnase zu Rastnase springt und dadurch die Spiralfeder in axialer Richtung etwas auseinandergezogen wird. Ein Drehstab mit einem solchen mit Rastnasen versehenen Spannabschnitt bzw. ein Stützzapfen oder Stopfen zur Aufnahme einer Spiralfeder mit einem solchen mit Rastnasen versehenen Spannabschnitt hat daher selbstständig erfinderische Bedeutung.

Ebenso ist es von Vorteil, wenn der Drehstab einen Lagerabschnitt mit einer Lagerstelle zur drehbaren Lagerung eines ersten Lagerstopfens des Wickelrohres aufweist. Der Drehstab vereint hierdurch mehrere Funktionen in einem Bauteil. Vorteilhaft dabei ist es zudem, dass der Drehstab bei Verschleiß der Lagerstelle in einfacher Weise ausgetauscht werden kann.

Vorteilhaft ist es zudem, wenn die Lagerstelle aus einem Metallmaterial gefertigt ist. Die Lagerstelle kann hierdurch besonders verschleißfest ausgeführt werden, was bei der Herstellung des Drehstabs in einfacher Weise realisiert werden kann.

Besonders vorteilhaft ist es dabei, wenn die Lagerstelle durch eine Metallbuchse gebildet ist. Hierdurch ist es einerseits möglich, den Drehstab kostengünstig als Kunststoffspritzgussstück herzustellen. Dies ermöglicht beispielsweise auch die kostengünstige Integration weiterer Funktionen wie beispielsweise der Rastnasen. Dennoch kann die Lagerstelle durch die Metallbuchse verschleißfest ausgeführt werden.

Ein solcher Stab mit einer durch eine Metallbuchse gebildeten Lagerstelle für einen Lagerstopfen des Wickelrohres ist auch unabhängig von der beanspruchten Rollovorrichtung und insbesondere auch unabhängig von einem Spannabschnitt zum Vorspann einen einer Spiralfeder vorteilhaft einsetzbar. Beispielsweise könnte ein solcher Stab mit einer Metallbuchse auch in einer herkömmlichen Rollovorrichtung in das Endstück eingesetzt werden und mit diesem formschlüssig verbunden werden, um eine Lagerstelle für einen Lagerstopfen des Wickelrohr auszubilden. Ein Drehstab mit einer solchen durch eine Metallbuchse gebildeten Lagerstelle sowie ein Stab mit einer solchen durch eine Metallbuchse gebildeten Lagerstelle genießt daher ebenfalls selbstständig erfinderische Bedeutung.

Dabei ist es von besonderem Vorteil, wenn die Metallbuchse direkt mit dem Drehstab aus dem Kunststoffmaterial vergossen ist. Bei dem Verfahren ist es entsprechend von Vorteil, wenn zur Ausbildung einer Lagerstelle für einen ersten Lagerstopfen des Wickelrohres eine Metallbuchse in ein Spritzgusswerkzeug eingelegt wird und die Metallbuchse in einem einzigen Arbeitsschritt direkt mit dem Drehstab bzw. dem Stab vergossen wird. Die Herstellung der Lagerstelle an dem Drehstab bzw. dem Stab kann hierdurch besonders einfach und kostengünstig erfolgen.

Des Weiteren ist es vorteilhaft, wenn der Drehstab einen Bedienabschnitt, insbesondere ein Griffstück zur werkzeuglosen Betätigung, aufweist. Mittels des Bedienabschnitts kann der Drehstab komfortabel von außen gedreht werden, um die Spiralfeder vorzuspannen. Dabei ist es nach einer ersten Ausführung denkbar, dass der Bedienabschnitt beispielsweise einen Mehrkant beinhaltet, welcher mit einem entsprechenden Mehrkantschlüssel betätigbar ist. Besonders vorteilhaft ist es jedoch, wenn der Bedienabschnitt ein Griffstück zur werkzeuglosen Betätigung beinhaltet. Hierdurch kann die Spiralfeder in einfacher Weise manuell vorgespannt werden und die Vorspannung auch wieder gelöst werden. Besonders vorteilhaft ist es dabei wiederum, wenn mittels des Bedienabschnitts, insbesondere des Griffstücks, zugleich auch der Drehstab an dem Endstück des Gehäuses festgelegt werden kann.

Weitere Vorteile der Erfindung sind in den nachfolgenden Ausführungsbeispielen beschrieben. Es zeigen:
- **Figur 1**: eine perspektivische Ansicht eines Laderaums eines Kraftfahrzeugs mit einer Rollovorrichtung,
- **Figur 2**: eine schematische, geschnittene Darstellung einer Rollovorrichtung mit einer Spannvorrichtung,
- **Figur 3a**: eine schematische Draufsicht eines Drehstabs einer Spannvorrichtung,
- **Figur 3b**: eine schematische Seitenansicht eines Drehstabs einer Spannvorrichtung,
- **Figur 3c**: eine schematische Rückansicht eines Drehstabs einer Spannvorrichtung,
- **Figur 4**: eine schematische, Seitenansicht eines ersten Endstücks eines Gehäuses einer Rollovorrichtung,
- **Figur 5**: eine perspektivische Darstellung eines Endes einer Spiralfeder,
- **Figur 6**: eine schematische Seitenansicht eines Drehstabs einer Spannvorrichtung nach einer weiteren Ausführung,
- **Figur 7**: eine schematische Darstellung eines Spannabschnitts mit Rasternasen im Zusammenwirken mit einem Ende einer Spiralfeder,
- **Figur 8**: eine schematische Seitenansicht eines Drehstabs einer Spannvorrichtung nach einer weiteren Ausführung, sowie
- **Figur 9**: eine schematische, geschnittene Darstellung einer Rollovorrichtung mit einer Spannvorrichtung nach einer weiteren Ausführung.

Bei der nachfolgenden Beschreibung der Ausführungsbeispiele werden Merkmale, die in den verschiedenen Figuren in ihrer Ausgestaltung und/oder Wirkweise identisch und/oder zumindest vergleichbar sind, jeweils mit den gleichen Bezugszeichen versehen. Weiterhin werden Merkmale meist lediglich bei ihrer erstmaligen Erwähnung detailliert erläutert, während bei den folgenden Ausführungsbeispielen lediglich auf die Unterschiede zu den bereits beschriebenen Ausführungsbeispielen eingegangen wird. Sofern Merkmale nicht nochmals detailliert erläutert werden, entspricht deren Ausgestaltung und/oder Wirkweise der Ausgestaltung und Wirkweise der anhand einer oder mehrerer der vorhergehenden Figuren bereits beschriebenen Merkmale. Weiterhin sind aus Gründen der Übersichtlichkeit von mehreren identischen Bauteilen bzw. Merkmalen oftmals nur eines oder nur einige wenige beschriftet.

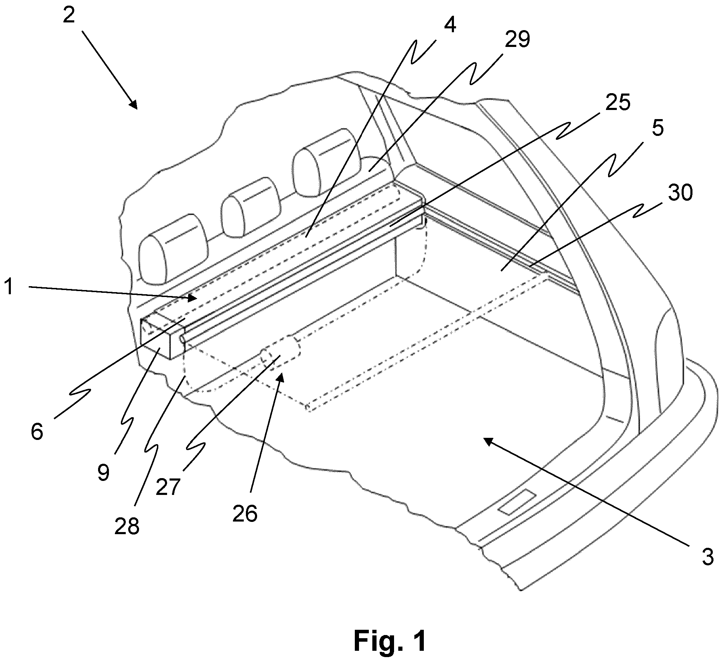

Figur 1 zeigt eine perspektivische, abgebrochene Darstellung eines Laderaums 3 eines Kraftfahrzeugs 2. Der Laderaum 3 ist vorliegend zwischen einer letzten Sitzreihe 29 und einer Heckklappe des Kraftfahrzeugs 2 angeordnet und wird weiterhin auf beiden Seiten durch Seitenverkleidungen des Kraftfahrzeugs 2 begrenzt. Vorliegend ist nur eine der beiden Seitenverkleidungen zu sehen. In dem Laderaum 3 ist eine Rollovorrichtung 1 angeordnet.

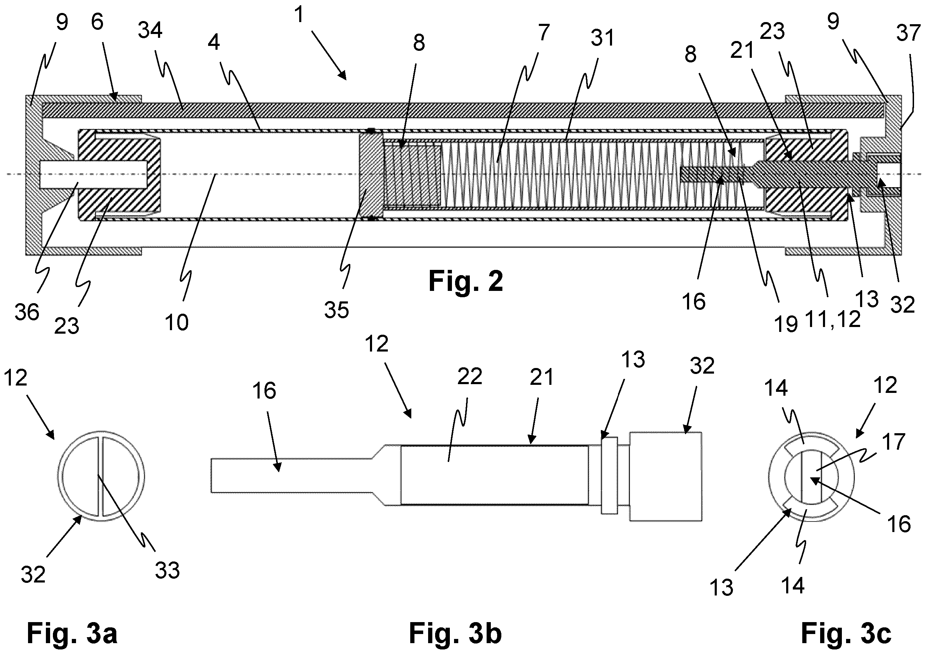

Die Rollovorrichtung 1weist ein drehbar in einem Gehäuse 6 gelagertes Wickelrohr 4 auf, auf welches eine Rollobahn 5 aufwickelbar ist. Die Rollobahn 5 ist mittels eines Auszugselements 25 von dem Wickelrohr 4 abwickelbar und mittels einer Spiralfeder 7 (siehe Figur 2), welche als Federmotor wirkt, wieder auf das Wickelrohr 4 aufwickelbar. Das Gehäuse 6 weist zwei Endstücke 9 auf, von denen vorliegend nur eines sichtbar ist und vorliegend weiterhin wenigstens eine die beiden Endstücke 9 verbindende Gehäusewand 34. Es ist jedoch nicht unbedingt erforderlich, dass das Gehäuse 6 vollständig geschlossen ist. Gegebenenfalls ist es auch ausreichend, wenn das Gehäuse 6 lediglich eine die beiden Endstücke 9 verbindende Strebe aufweist. Auch dies soll gemäß der vorliegenden Erfindung unter dem Begriff Gehäuse umfasst sein. Das Gehäuse 6 ist wiederum in hier nicht dargestellten Halterungen in den Seitenverkleidungen des Kraftfahrzeugs 2 aufgenommen und dadurch im Kraftfahrzeug 2 gehalten. Vorzugsweise kann das Gehäuse 6 mit dem wird über 4 bzw. die gesamte Rollovorrichtung 1 aus dem Kraftfahrzeug 2 entnommen werden.

Zum Ausziehen bzw. Aufwickeln der Rollobahn 5 kann das Auszugselement 25 mittels einer Antriebsvorrichtung 26 bewegt werden. Die Antriebsvorrichtung 26 weist hierzu einen elektrischen Antrieb 27 auf, der über ein Übertragungsmittel 28 wie beispielsweise ein Steigungskabel mit den Enden des Auszugselements 25 verbunden ist. Das Auszugselement 25 ist hierzu in seitlichen Führungsschienen 30 geführt. Alternativ ist es jedoch auch möglich, die Rollobahn 5 lediglich von Hand auszuziehen bzw. die Rollovorrichtung 1 manuell zu bedienen. In diesem Fall ist es auch nicht unbedingt erforderlich, das Auszugselement 25 in seitlichen Führungsschienen 30 zu führen.

Die Anordnung der Rollovorrichtung 1 in einem Laderaum 3 eines Kraftfahrzeugs ist lediglich beispielhaft zu verstehen. Die im Folgenden beschriebene Rollovorrichtung 1 kann ebenso auch an anderen Stellen eines Kraftfahrzeugs eingesetzt werden.

Figur 2 zeigt eine schematische, geschnittene Darstellung einer Rollovorrichtung 1 mit einer Spannvorrichtung 11. Die Rollovorrichtung 1 beinhaltet ein Wickelrohr 4, auf welches die hier nicht dargestellt Rollobahn 5 Aufwickeln weist und welches in dem Gehäuse 6 aufgenommen ist. Wie bereits beschrieben weist das Gehäuse 6 jeweils zwei Endstücke 9 und vorliegend eine die beiden Endstücke 9 verbindende Gehäusewand 34 auf. Innerhalb des Wickelrohres 4 ist spannbar eine Spiralfeder 7 angeordnet. Das Wickelrohr 4 ist dabei an den Endstücken 9 des Gehäuses 6 drehbar um seine Längsachse 10 gelagert. Hierzu weist die Rollovorrichtung 1 bzw. das Wickelrohr 4 an jedem seiner Enden einen Lagerstopfen 23 auf. An dem in Figur 2 links dargestellten Ende des Wickelrohres 4 ist gemäß vorliegender Darstellung der Lagerstopfen 23 an einem mit dem Endstück 9 verbundenen Lagerbolzen 36 gelagert. An dem in Figur 2 rechts dargestellten Ende des Wickelrohres 4 ist der Lagerstopfen 23 gemäß vorliegender Darstellung hingegen an einem Lagerabschnitt 21 eines Drehstabs 12 gelagert, welcher zugleich als Spannvorrichtung 11 dient und Funktion im Folgenden noch erklärt wird. Es versteht sich jedoch, dass auch dies lediglich beispielhaft zu verstehen ist. So könnte beispielsweise der im Bild links dargestellte Lagerstopfen 23 auch direkt an einem Ansatz des links dargestellten Endstücks 9 gelagert sein. Ebenso könnte der im Bild rechts dargestellte Lagerstopfen 23 an einem Ansatz des im Bild rechts dargestellten Endstücks 9 oder an einer mit dem Endstück 9 verbundenen Lagerbuchse gelagert sein. Der Lagerstopfen 23 müsste jedoch in diesem Fall eine Bohrung für den Durchtritt der Spannvorrichtung 11 aufweisen.

Die Spiralfeder 7 ist mit ihrem einen Ende 8, welches in Figur 2 links gezeigt ist, drehfest und auch axialfest mit dem Wickelrohr 4 verbunden. Das Ende 8 der Spiralfeder 7 ist hierzu auf einem Stützzapfen 35 aufgenommen, welcher wiederum fest mit dem Wickelrohr 4 verbunden ist, die vorliegend durch die zwei schwarzen Punkte symbolisiert ist. Diese Verbindung kann beispielsweise durch Verschrauben, Vernieten, oder auch Vercrimpen des Wickelrohres 4 mit dem Stützzapfen 35 erfolgen. Das andere Ende 8 der Spiralfeder 7 ist hingegen drehbar und auch axial verschiebbar in dem Wickelrohr 4 aufgenommen, um hierdurch das Vorspannender Spiralfeder 7 zu ermöglichen, was im Folgenden noch erläutert wird. Zum besseren Schutz ist gemäß vorliegender Darstellung die Spiralfeder 7 innerhalb des Wickelrohres 4 weiterhin noch von einer Hülle 31 umgeben. Das in der vorliegenden Figur rechts gezeigte, erste Endstück 9 des Gehäuses 6 ist dabei dem drehbaren Ende 8 der Spiralfeder 7 zugewandt. Demgegenüber ist das in der vorliegenden Figur links gezeigte, zweite Endstück 9 des Gehäuses 6 dem drehfesten Ende 8 der Spiralfeder 7 zugewandt.

Bei herkömmlichen Rollovorrichtungen 1 musste die Spiralfeder 7 unter hohem Kraftaufwand vorgespannt werden und die Rollovorrichtung 1 mit hohem Montageaufwand zusammengebaut werden. Zum Vorspannen wurde beispielsweise der Lagerstopfen 23 fest mit dem Ende 8 der Spiralfeder 7 verbunden, sodann die Spiralfeder 7 durch Drehen des Lagerstopfens 23 vorgespannt und anschließend der Lagerstopfen 23 ebenfalls mit dem Wickelrohr 4 verbunden. Das so mit der vorgespannten Spiralfeder 7 vormontierte Wickelrohr 4 konnte sodann in das Gehäuse 6 eingesetzt werden.

Demgegenüber können bei der vorliegenden Rollovorrichtung 1 das Wickelrohr 4, die ungespannte Spiralfeder 7, die Lagerstopfen 23 und das Gehäuse 6 mit den Endstücken 9 direkt zusammen montiert werden, was die Montage wesentlich erleichtert. Das Vorspannen kann sodann nach der Montage der Rollovorrichtung 1 mittels der erfindungsgemäßen Spannvorrichtung 11 erfolgen.

Die Spannvorrichtung 11 ist dabei, wie in Figur 2 ersichtlich, von außen durch das erste, dem drehbaren Ende 8 der Spiralfeder 7 zugewandte Endstück 9 des Gehäuses 6 hindurch betätigbar. Gemäß vorliegend gezeigten Darstellung durchdringt dabei die Spannvorrichtung 11 das erste Endstück 9 und ragt bis an dessen Außenseite 37. Die Spannvorrichtung 11 ist hierdurch auch vom Äußeren des Gehäuses 6 aus zugänglich. Zum Betätigen der Spannvorrichtung 11 weist die vorliegend gezeigte Spannvorrichtung 11 einen Bedienabschnitt 32 auf. Dieser erlaubt vorzugsweise eine werkzeuglose Bedienung. Allerdings ist eine Betätigung der Spannvorrichtung 11 mittels eines Werkzeugs wie beispielsweise eines Schlüssels ebenfalls denkbar. Abweichend von der gezeigten Darstellung ist es jedoch nicht zwingend erforderlich, dass die Spannvorrichtung 11 das Endstück 9 durchdringt. Die Spannvorrichtung 11 könnte sich auch lediglich im Inneren des Gehäuses 6 erstrecken. Der Bedienabschnitt 32 der Spannvorrichtung 11 könnte in diesem Fall auch durch eine Ausnehmung des ersten Endstücks 9 zugänglich sein.

Zum Vorspannen der Spiralfeder 7 weist die Spannvorrichtung 11 einen Spannabschnitt 16 auf, welcher mit dem drehbaren Ende 8 der Spiralfeder 7, vorliegend dem im Bild rechts gezeigten Ende 8, zusammenwirkt.

Nachdem schließlich die Rollovorrichtung 1 montiert ist und die Spiralfeder 7 mittels der Spannvorrichtung 11 vorgespannt ist, kann die Spannvorrichtung 11 mittels eines Verschlussabschnitts 13 an dem dem drehbaren Ende 8 der Spiralfeder 7 zugewandten, ersten Endstück 9 festgelegt werden, um die Vorspannung zu fixieren. Die Spiralfeder 7 ist nun im Sinne des Aufwickelns der hier nicht gezeigten Rollobahn 5 vorgespannt, sodass die Rollobahn 5 entgegen der Federkraft der Spiralfeder 7 von dem Wickelrohr 4 abgewickelt werden muss und durch die Federkraft der Spiralfeder 7 auf das Wickelrohr 4 aufgewickelt werden kann.

Gemäß vorliegender Darstellung beinhaltet die Spannvorrichtung 11 einen Drehstab 12, welcher drehbar in dem ersten Endstück 9 des Gehäuses angeordnet ist. Der Spannabschnitt 16 des Drehstabs 12 wirkt dabei zum Vorspannen der Spiralfeder 7 direkt mit wenigstens einer Windung 19 der Spiralfeder zusammen, wie anhand der folgenden Figuren noch näher dargelegt wird. Zum Vorspannen der Spiralfeder 7 wird der Drehstab 12 um seine Längsachse 10, welche mit der Längsachse 10 des Wickelrohres 4 zusammenfällt, gedreht, beispielsweise um 10 Umdrehungen. Der Durchmesser der Spiralfeder 7 nimmt hierdurch ab, während sich zugleich die Spiralfeder 7 um ein entsprechendes Maß längt. Wie bereits erwähnt, weist der vorliegende Drehstab 12 zudem einen Lagerabschnitt 21 zur Lagerung eines Lagerstopfen 23 des Wickelrohres 4 auf, was jedoch nicht unbedingt erforderlich ist, da das Wickelrohr 4 auch anderweitig gelagert werden kann. Weiterhin weist der Drehstab 12 wie bereits erwähnt auch den Bedienabschnitt 32 auf.

Die Figuren 3a, 3b und 3c zeigen nun eine bestimmte Ausführung eines solchen Drehstabs 12 in einer Draufsicht, einer Seitenansicht sowie einer Rückansicht.

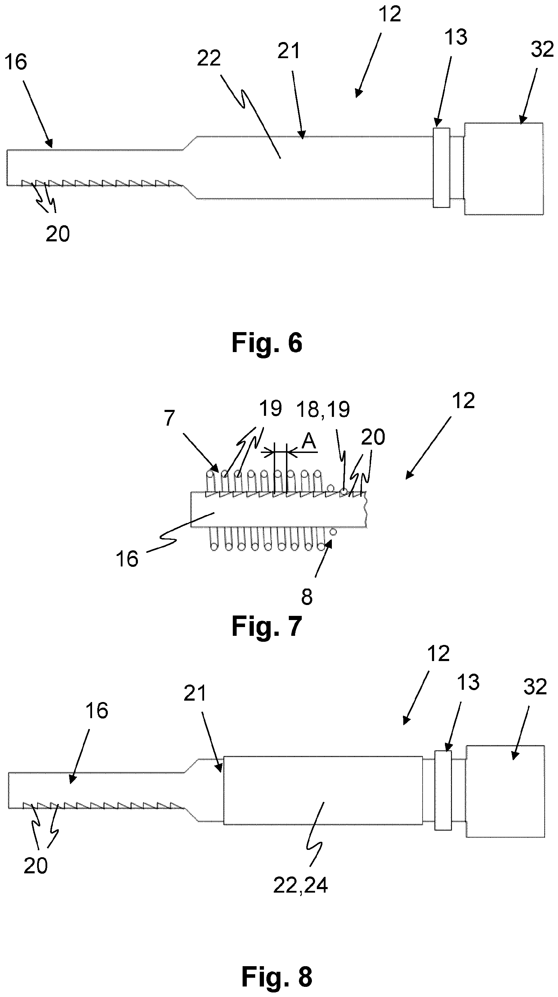

In Figur 3b ist dabei der Drehstab 12 in einer Seitenansicht gezeigt. Erkennbar sind dabei wiederum der Spannabschnitt 16, der Lagerabschnitt 21, der Verschlussabschnitt 13 sowie der Bedienabschnitt 32. Der Lagerabschnitt 21 bildet dabei eine Lagerstelle 22 für den Lagerstopfen 23 (siehe Figur 2) des Wickelrohres 4 aus. Die Lagerstelle 22 kann im einfachsten Fall direkt durch die Oberfläche des Drehstabs 12 ausgebildet sein. Ist jedoch der Drehstab 12 aus einem Kunststoffmaterial ausgebildet, so kann die Lagerstelle 22 zur Verbesserung der Verschleißbeständigkeit auch aus einem Metallmaterial ausgebildet sein. Beispielsweise kann der Drehstab im Bereich des Lagerabschnitt 21 eine die Lagerstelle 22 ausbildende Beschichtung aufweisen oder, wie in Figur 8 dargestellt, eine Metallbuchse 24 beinhalten.

Figur 3a zeigt den Drehstab 12 in einer Seitenansicht von rechts, in welcher der Bedienabschnitt 32 gut erkennbar ist. Bei dem vorliegend gezeigten Drehstab 12 beinhaltet der Bedienabschnitt 32 ein Griffstück 33, welches eine manuelle und werkzeuglose Betätigung des Drehstabs 12 zum Vorspannen der Spiralfeder 7 erlaubt.

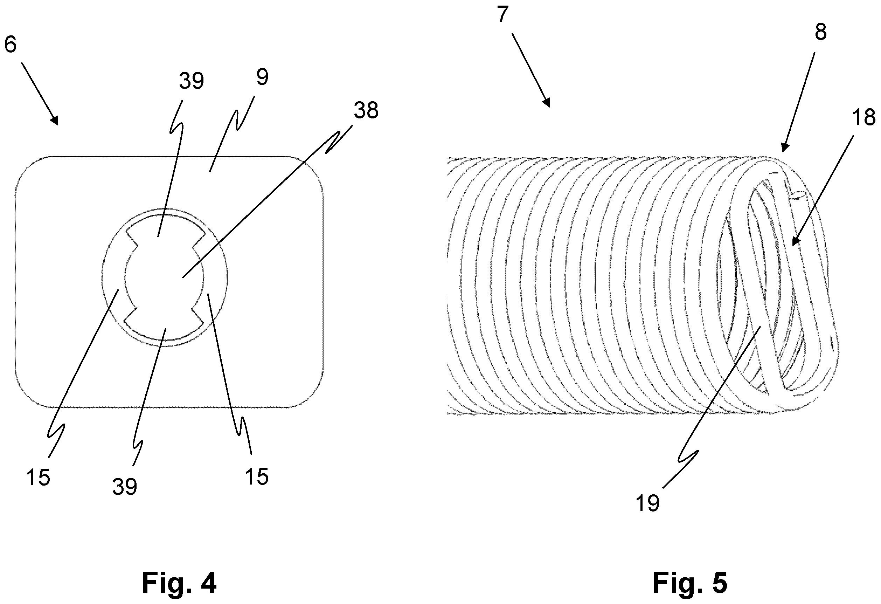

Figur 3c zeigt hingegen den Drehstab 12 in einer Seitenansicht von links, in welcher der Verschlussabschnitt 13 gut erkennbar ist. Bei dem vorliegend gezeigten Drehstab 12 beinhaltet der Verschlussabschnitt 13 zwei erste Verschlusselemente 14. Diese sind zum Zusammenwirken mit zwei zweiten Verschlusselementen 15 (siehe Figur 4) des ersten Endstücks 9 ausgebildet. Im vorliegenden Beispiel bilden die ersten Verschlusselemente 14 des Drehstab 12 und die zweiten Verschlusselemente 15 des Endstücks 9 einen Bajonettverschluss aus. Es versteht sich jedoch, dass dies lediglich beispielhaft zu verstehen ist. Der Verschlussabschnitt könnte auch in anderer Weise ausgebildet sein. Ebenso könnte die Rollovorrichtung 1 auch ein zusätzliches Verriegelungselement zum Verriegeln des Verschlussabschnitts 13 des Drehstabs 12 mit dem Endstück 9 beinhalten. Die Ausführung der ersten Verschlusselemente 14 als Teil eines Bajonettverschlusses ist jedoch besonders vorteilhaft, da er Drehstab 12 zum einen einfach in das Endstück 9 in axialer Richtung der Spiralfeder 7 bzw. des Wickelrohres 4 einsetzbar ist und die Verschlusselemente 14 nach dem Vorspannen der Spiralfeder 7 bzw. nach Betätigung des Drehstabes 12 aufgrund der Längung der Spiralfeder 7 selbsttätig in ihrer Verschlussposition gehalten werden. Der Bediener muss lediglich darauf achten, den Drehstab 12 bzw. die Verschlusselemente 14 des Drehstabs 12 nach Beendigung des Spannvorganges in die Verschlussposition zu drehen, in welcher sich die Verschlusselemente 14 des Drehstabs 12 in Deckung mit den Verschlusselementen 15 (siehe Figur 4) des Endstücks 9 befinden.

Weiterhin ist in Figur 3c auch der Spannabschnitt 16 des Drehstab 12 gut zu erkennen. Der Spannabschnitt 16 ist zum Vorspannen ebenso wie zum Entspannen der Spiralfeder 7 mit dem drehbaren Ende 8 der Spiralfeder 7 formschlüssig in Eingriff bringbar. Hierzu weist der Drehstab 12 eine erste Mitnehmerkontur 17 auf, welche in Umfangsrichtung des Drehstabs 12 bzw. der Spiralfeder 7 formschlüssig mit einer zweiten Mitnehmerkontur 18 (siehe Figur 5) zusammenwirkt. Im vorliegenden Fall weist die erste Mitnehmerkontur 17 die Form eines an seinen Schmalseiten abgerundeten Rechtecks auf.

Figur 4 zeigt eine schematische Seitenansicht eines ersten Endstücks 9 eines Gehäuses 6 einer Rollovorrichtung 1. das Endstück 9 weist eine Öffnung 38 für den Durchtritt der Spannvorrichtung 11 bzw. des Drehstabs 12 auf, wodurch die Betätigung der Spannvorrichtung 11 von außen durch das Endstück 9 hindurch ermöglicht wird. Im vorliegenden Fall beinhaltet die Öffnung 38 zugleich die zweiten Verschlusselemente 15, welche vorliegend einen Teil eines Bajonettverschlusses ausbilden und mit den ersten Verschlusselementen 14 des Drehstabs, wie in Figur 3c gezeigt, zusammenwirken. Weiterhin beinhaltet im vorliegenden Beispiel die Form der Öffnung 38 auch Ausnehmungen 39 für den Durchtritt der ersten Verschlusselemente 14 des Drehstabs 12.

Figur 5 zeigt weiterhin eine perspektivische, abgebrochene Darstellung einer Spiralfeder 7 mit ihrem drehbaren Ende 8. Im vorliegenden Beispiel weist die Spiralfeder 7 an ihrem drehbaren Ende 8 wenigstens eine Windung 19 auf, welche eine zweite Mitnehmerkontur 18 ausbildet. Die zweite Mitnehmerkontur 18 ist komplementär zu der ersten Mitnehmerkontur 17 des Drehstab 12 (siehe Figur 3c) ausgebildet. Die zweite Mitnehmerkontur 18 der Spiralfeder 7 sowie die erste Mitnehmerkontur 17 des Drehstabs 12 bilden somit in Umfangsrichtung des Drehstabs 12 bzw. der Spiralfeder 7 einen Formschluss aus. Im vorliegend gezeigten Beispiel bildet die Windung 19 eine im Wesentlichen ovalförmige Mitnehmerkontur 18 aus.

Es versteht sich, dass die Form der Mitnehmerkonturen 17 und 18 in den Figuren 3c und 5 lediglich beispielhaft zu verstehen sind. Es sind auch andere Konturen, welche eine Drehmomentübertragung in Umfangsrichtung erlauben, möglich. Beispielsweise sind hier Dreikant-, Vierkant- oder Mehrkantkonturen zu nennen. Ebenso ist es denkbar, dass die Spiralfeder 7 als Mitnehmerkontur 18 eine herkömmliche Öse aufweist, auf welche eine entsprechend geformte Ausnehmung des Drehstabs 12 aufsetzbar ist. In jedem Fall ist es jedoch vorteilhaft, wenn die beiden Mitnehmerkontur 17 und 18 in axialer Richtung hinterschneidungsfrei ausgeführt sind. Hierdurch ist es möglich, den Drehstab 12 und das Ende 8 der Spiralfeder 7 durch einfaches Ineinanderschieben in axialer Richtung der Spiralfeder 7 bzw. des Drehstabs 12 miteinander in Eingriff zu bringen.

Figur 6 zeigt eine schematische Seitenansicht eines Drehstabs 12 bzw. einer Spannvorrichtung 11 nach einer weiteren Ausführung. Im Unterschied zu der in Figur 3b gezeigten Ausführung weist dieser Drehstab im Bereich seines Spannabschnitts 16 mehrere Rastnasen 20 zum Verrasten der wenigstens einen, die zweite Mitnehmerkontur 18 ausbildenden Windung 19 der Spiralfeder 7 auf. Gemäß dem vorliegend gezeigten Beispiel sind die Rastnasen 20 einteilig an den Spannabschnitt 16 angeformt und in diesen eingekerbt. Dies ist besonders vorteilhaft, wenn der Drehstab 12 als Kunststoffspritzgussstück ausgeführt ist, weil die Rastnasen 20 dann direkt an diesen angeformt werden können. Ebenso ist es jedoch denkbar, dass die Rastnasen 20 durch ein separates, mit dem Drehstab 12 verbundenes Bauteil ausgebildet werden.

Anhand der Figur 7 wird nun schematisch das Verrasten der Mitnehmerkontur 18 der Spiralfeder 7 an den Rastnasen 20 erklärt. Hierzu zeigt Figur 7 eine schematische Darstellung eines Spannabschnitts 16 mit Rastnasen 20 im Zusammenwirken mit einem Ende 8 einer Spiralfeder 7. Dabei ist ersichtlich, dass die wenigstens eine, die Mitnehmerkontur 18 ausbildende Windung 19 der Spiralfeder 7 aufgrund der Vorspannkraft der Spiralfeder 7 hinter eine Rastflanke einer Rastnase gedrückt wird und hierdurch die Spiralfeder 7 in ihrer aktuellen axialen Position hält.

Beim Vorspannen werden dabei der Spannabschnitt 16 sowie die Spiralfeder 7 gegeneinander verdreht, wobei wie bereits erwähnt der Durchmesser der Spiralfeder 7 abnimmt und die Länge der Spiralfeder 7 zunimmt. Ohne die Rastnasen 20 würde dabei die Länge der Spiralfeder 7 kontinuierlich und mit jeder Umdrehung nur um ein geringes Maß zunehmen. Dadurch, dass die mehreren Rastnasen 20 jedoch einen axialen Abstand A zueinander aufweisen, wird die wenigstens eine, die Mitnehmerkontur 18 ausbildende Windung 19 beim Verdrehen des Spannabschnitts 16 gegen die Spiralfeder 7 aufgrund der Spannkraft der Spiralfeder 7 jeweils entlang der schrägen Flanke einer Rastnase 20 des hinter die Rastflanke der Rastnase 20 gedrückt. Hierdurch wird die Spiralfeder 7 in axialer Richtung gedehnt und die Wendungen 19 der Spiralfeder 7 werden voneinander getrennt bzw. liegen nicht mehr aneinander an. Hierdurch kann unerwünschten Geräuschentwicklungen der Spiralfeder 7 im Betrieb entgegengewirkt werden. Dabei ist es besonders vorteilhaft, dass das axiale Dehnen der Spiralfeder 7 beim Spannen der Spiralfeder 7 aufgrund der Rastnasen 20 selbsttätig erfolgt. Es ist nicht erforderlich, dass der Bediener hierzu aktiv die Spiralfeder 7 auseinander zieht.

Ein solcher Spannabschnitt 16 mit Rastnasen 20 ist daher auch unabhängig von dem in Figur 6 gezeigten Drehstab vorteilhaft. Insbesondere kann ein solcher Spannabschnitt 16 beispielsweise auch an einem Stützzapfen 35 (siehe Figur 2) eingesetzt werden. In diesem Fall ist auch das drehfeste Ende 8 der Spiralfeder 7 mit wenigstens einer eine Mitnehmerkontur 18 ausbildenden Windung 19 versehen. Weiterhin können derartige Spannabschnitte der 16 bzw. Rastnasen 20 auch unabhängig von der Spanneinrichtung 11 an Stützzapfen 35 herkömmlich vorgespannter Spiralfedern 7 eingesetzt werden.

Figur 8 zeigt einen Drehstab 12 nach einer weiteren Ausführung in einer schematischen Seitenansicht. Im Unterschied zu den zuvor gezeigten Ausführungen weist dieser zur Ausbildung einer Lagerstelle 22 an seinem Lagerabschnitt 21 eine Metallbuchse 24 auf. Diese kann beispielsweise die auf den Lagerabschnitt 21 aufgepresst oder aufgeklebt sein. Sofern der Drehstab 12 jedoch als Kunststoffspritzgussstück ausgeführt wird, ist es besonders vorteilhaft, wenn die Metallbuchse 24 direkt mit dem Drehstab 12 vergossen ist. Hierzu wird die Metallbuchse 24 in das Spritzgusswerkzeug eingelegt und sodann in einem einzigen Arbeitsschritt direkt mit dem Drehstab 12 vergossen.

Ein Stab mit einer solchen Metallbuchse 24 ist auch unabhängig von dem hier gezeigten Drehstab 12 und insbesondere auch unabhängig von der Ausführung des Spannabschnitts 16 mit oder ohne Rastnasen 20, des Verschlussabschnitts sowie des Bedienabschnitts 32 vorteilhaft. So wäre es beispielsweise auch denkbar, einen Stab mit einem Lagerabschnitt 21 mit einer Metallbuchse 24 unabhängig von der Spannvorrichtung 11 auszuführen. Beispielsweise könnte der Stab auch als Hohlstab ausgeführt werden und die Spannvorrichtung 11 durch den Hohlstab hindurchgeführt werden. Weiterhin könnte ein solcher Stab auch bei einer herkömmlich vorgespannten Spiralfeder 7 eingesetzt werden, um die Lagerstelle 22 für den Lagerstopfen 23 auszubilden. Der Stab könnte dabei ebenfalls von außen durch das Endstück 9 hindurch mit dem Lagerstopfen 23 verbunden werden und sodann an dem Endstück 9 festgelegt werden. Vorteilhaft bei einer solchen Ausführung ist es, dass der Stab mit dem Lagerabschnitt 21 unabhängig von dem Endstück 9 in einfacher Weise ausgetauscht werden kann.

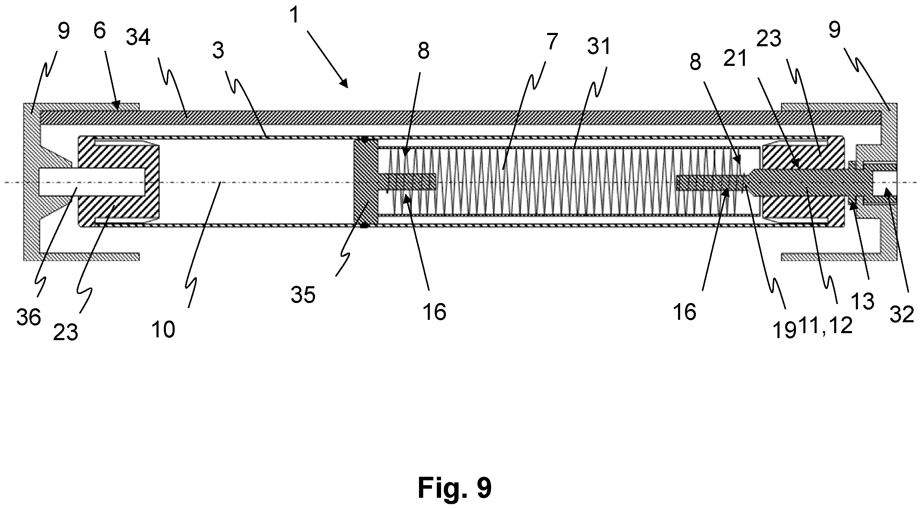

Figur 9 zeigt schließlich noch eine schematische, geschnittene Darstellung einer Rollovorrichtung 1 mit einer Spannvorrichtung 11 nach einer weiteren Ausführung. Im Unterschied zur Ausführung der Figur 2 weist dabei auch der Stützzapfen 35 eine Art Spannabschnitt 16 auf. Dieser kann in vorteilhafter Weise ebenfalls mit Rastnasen 20 versehen sein, jedoch ist auch eine Ausführung ohne Rastnasen 20 vorteilhaft. Das dem Stützzapfen 35 zugewandte, drehfeste Ende 8 der Spiralfeder 7 ist dabei ebenfalls mit einer zweiten Mitnehmerkontur 18 (hier nicht dargestellt) versehen und wirkt mit einer ersten Mitnehmerkontur 17 (hier nicht dargestellt) des Spannabschnitts 16 des Stützzapfens 35 zusammen. Hierdurch ist es nicht erforderlich, dass Ende 8 der Spiralfeder 7 fest mit dem Stützzapfen zu verbinden. Vielmehr ist das Ende 8 der Spiralfeder 7 durch das Zusammenwirken der Mitnehmerkonturen 17 und 18 drehfest mit dem Wickelrohr 4 verbunden. Hierdurch wird die Montage der Rollovorrichtung 1 weiter erleichtert, da die Rollobauteile zum Zusammenbau lediglich in axialer Richtung des Wickelrohres 4 ineinander gesteckt werden müssen.

Die Montage der Rollovorrichtung 1 kann beispielsweise wie folgt durchgeführt werden: der Stützzapfen 35 wird zunächst mit dem Wickelrohr 4 verbunden und der dem Stützzapfen 35 zugewandte Lagerstopfen 23 wird in das Wickelrohr 4 eingesetzt. Sodann wird das Wickelrohr 4 mit dem Stützzapfen 35 und dem Lagerstopfen 23 in axialer Richtung des Wickelrohres 4 auf den Lagerbolzen 36 des zweiten Endstücks 9 aufgesetzt. Ebenso kann die wenigstens eine Gehäusewand 34 in axialer Richtung des Wickelrohres 4 und damit auch in axialer Richtung der Rollovorrichtung 1 eingesetzt werden. Die Spiralfeder 7 kann nun ungespannt in axialer Richtung des Wickelrohres 4 in dieses eingebracht werden, wobei sie zuvor gegebenenfalls mit einer Hülle 31 versehen werden kann. Sodann kann der zweite Lagerstopfen 23, welcher der dem drehbaren Ende 8 der Spiralfeder 7 zugewandt ist, in das Wickelrohr 4 eingesteckt werden. Schließlich kann das erste Endstück 9 in axialer Richtung des Wickelrohres 4 auf das Gehäuse 6 aufgesteckt werden bzw. mit der wenigstens einen Gehäusewand 34 verbunden werden. Die Rollovorrichtung 1 ist nun durch einen einfachen Steckprozess vollständig montiert, was dadurch ermöglicht wird, dass die Spiralfeder 7 nicht vorgespannt montiert wird. Es versteht sich, dass, je nach Ausführung der Rollovorrichtung 1 trotz der einfachen Steckmontage einzelne Bauteile der Rollovorrichtung 1 zusätzlich noch miteinander fixiert werden können, beispielsweise durch Verschraubungen. Insbesondere können die Endstücke 9 zu ihrer Fixierung auch mit der wenigstens einen Gehäusewand 6 verschraubt werden.

Zum Vorspannen der Spiralfeder 7 wird dann wie bereits beschrieben der Drehstab 12 in axialer Richtung des Wickelrohres 4 durch das erste Endstück 9 hindurch in die Rollovorrichtung 1 eingesetzt und dabei sowohl mit dem Lagerstopfen 23 als auch dem zugehörigen, drehbaren Ende 8 der Spiralfeder 7 in Eingriff gebracht, was durch das Einsetzen in axialer Richtung selbsttätig erfolgt. Sodann kann durch mehrere Umdrehungen des Drehstabs 12 die Spiralfeder 7 vorgespannt werden und die Vorspannung durch Verschließen bzw. Verriegeln des Verschlussabschnitt 13 mit dem ersten Endstück 9, insbesondere durch Verriegeln des Bajonettverschlusses, die Vorspannung der Spiralfeder 7 fixiert werden.

Die vorliegende Erfindung ist nicht auf die dargestellten und beschriebenen Ausführungsbeispiele beschränkt. Abwandlungen im Rahmen der Patentansprüche sind ebenso möglich.

### Bezugszeichenliste

- 1: Rollovorrichtung
- 2: Kraftfahrzeug
- 3: Laderaum
- 4: Wickelrohr
- 5: Rollobahn
- 6: Gehäuse
- 7: Spiralfeder
- 8: Ende der Spiralfeder
- 9: Endstück
- 10: Längsachse
- 11: Spannvorrichtung
- 12: Drehstab
- 13: Verschlussabschnitt
- 14: Erstes Verschlusselement
- 15: Zweites Verschlusselement
- 16: Spannabschnitt
- 17: erste Mitnehmerkontur
- 18: zweite Mitnehmerkontur
- 19: Windung
- 20: Rastnase
- 21: Lagerabschnitt
- 22: Lagerstelle
- 23: Lagerstopfen
- 24: Metallbuchse
- 25: Auszugselement
- 26: Antriebsvorrichtung
- 27: Elektrischer Antrieb
- 28: Übertragungsmittel
- 29: Letzte Sitzreihe
- 30: Führungsschienen
- 31: Hülle
- 32: Bedienabschnitt
- 33: Griffstück
- 34: Gehäusewand
- 35: Stützzapfen
- 36: Lagerbolzen
- 37: Außenseite
- 38: Öffnung
- 39: Ausnehmung

## Patentansprüche

1. Rollovorrichtung (1) für ein Kraftfahrzeug (2), insbesondere Rollovorrichtung (1) zum Abtrennen eines Laderaums (3) eines Kraftfahrzeugs (2),
mit einem Wickelrohr (4),
mit einer auf das Wickelrohr (4) aufwickelbaren Rollobahn (5) mit einem Gehäuse (6), in welchem das Wickelrohr (4) aufgenommen ist,
sowie mit einer innerhalb des Wickelrohres (4) spannbar angeordneten Spiralfeder (7), deren eines Ende (8) drehfest mit dem Wickelrohr (4) verbunden ist und deren anderes Ende (8) drehbar in dem Wickelrohr (4) aufgenommen ist,
wobei das Gehäuse (6) zwei Endstücke (9) aufweist, an welchen das Wickelrohr (4) um seine Längsachse (10) drehbar gelagert ist, wobei ein erstes Endstück (9) dem drehbaren Ende (8) der Spiralfeder (7) zugewandt ist und ein zweites Endstück (9) dem drehfesten Ende (8) der Spiralfeder (7) zugewandt ist,
**dadurch gekennzeichnet,**
**dass** die Rollovorrichtung (1) eine Spannvorrichtung (11) zum Vorspannen der Spiralfeder (7) aufweist,
welche von außen durch das erste Endstück (9) des Gehäuses (6) hindurch betätigbar ist
und welche zum Fixieren einer Vorspannung der Spiralfeder (7) an dem ersten Endstück (9) des Gehäuses (6) festlegbar ist, insbesondere formschlüssig festlegbar ist.

2. Rollovorrichtung (1) nach dem vorhergehenden Anspruch, **dadurch gekennzeichnet, dass** die Spannvorrichtung (11) einen Drehstab (12) umfasst, welcher in nicht festgelegtem Zustand der Spannvorrichtung (11) drehbar in dem ersten Endstück (9) des Gehäuses (6) angeordnet ist.

3. Rollovorrichtung (1) nach einem der vorhergehenden Ansprüche, **dadurch gekennzeichnet, dass** der Drehstab (12) einen Verschlussabschnitt (13) aufweist, welcher wenigstens ein erstes Verschlusselement (14) eines Bajonettverschlusses beinhaltet, und dass das erste Endstück (9) des Gehäuses (6) wenigstens ein mit dem ersten Verschlusselement (14) zusammenwirkendes, zweites Verschlusselement (15) des Bajonettverschlusses aufweist.

4. Rollovorrichtung (1) nach einem der vorhergehenden Ansprüche, **dadurch gekennzeichnet, dass** der Drehstab (12) einen Spannabschnitt (16) aufweist, welcher zum Vorspannen und/oder Entspannen der Spiralfeder (7) formschlüssig mit dem drehbaren Ende (8) der Spiralfeder (7) zusammenwirkt, wobei vorzugsweise der Spannabschnitt (16) des Drehstabs (12) eine erste Mitnehmerkontur (17) aufweist, welche mit wenigstens einer zweiten Mitnehmerkontur (18) der Spiralfeder (7) zusammenwirkt, wobei vorzugsweise das drehbare Ende (8) der Spiralfeder (7) wenigstens eine Windung (19) aufweist, welche die zweite Mitnehmerkontur (18) ausbildet.

5. Rollovorrichtung (1) nach einem der vorhergehenden Ansprüche, **dadurch gekennzeichnet, dass** der Spannabschnitt (16) des Drehstabs (12) zum Vorspannen der Spiralfeder (7) von außen durch das Endstück (9) hindurch mit dem drehbaren Ende (8) der Spiralfeder (7) in Eingriff bringbar ist, insbesondere in axialer Richtung der Spiralfeder (7) in die wenigstens eine, die zweite Mitnehmerkontur (18) ausbildende Windung (19) einschiebbar ist.

6. Rollovorrichtung (1) nach einem der vorhergehenden Ansprüche, **dadurch gekennzeichnet, dass** der Drehstab (12) aus einem Kunststoffmaterial gefertigt ist, insbesondere als Kunststoffspritzgußstück gefertigt ist.

7. Rollovorrichtung (1) nach einem der vorhergehenden Ansprüche, **dadurch gekennzeichnet, dass** der Spannabschnitt (16) des Drehstabs (12) mehrere, insbesondere einteilig an den Spannabschnitt (16) angeformte, vorzugsweise in den Spannabschnitt (16) eingekerbte, Rastnasen (20) zum Verrasten der wenigstens einen, die zweite Mitnehmerkontur (18) ausbildenden Windung (19) an dem Spannabschnitt (16) aufweist.

8. Rollovorrichtung (1) nach einem der vorhergehenden Ansprüche, **dadurch gekennzeichnet, dass** der Drehstab (12) einen Lagerabschnitt (21) mit einer Lagerstelle (22) zur drehbaren Lagerung eines ersten Lagerstopfens (23) des Wickelrohres (4) aufweist, wobei vorzugsweise die Lagerstelle (22) aus einem Metallmaterial gefertigt ist, wobei vorzugsweise die Lagerstelle (22) durch eine Metallbuchse (24) gebildet ist.

9. Rollovorrichtung (1) nach einem der vorhergehenden Ansprüche, **dadurch gekennzeichnet, dass** die Metallbuchse (24) direkt mit dem Drehstab (12) aus dem Kunststoffmaterial vergossen ist.

10. Rollovorrichtung (1) nach einem der vorhergehenden Ansprüche, **dadurch gekennzeichnet, dass** der Drehstab (12) einen Bedienabschnitt (32), insbesondere ein Griffstück (33) zur werkzeuglosen Betätigung, aufweist.

11. Verfahren zur Herstellung einer Rollovorrichtung (1) für ein Kraftfahrzeug (2), insbesondere einer Rollovorrichtung (1) zum Abtrennen eines Laderaums (3) eines Kraftfahrzeugs (2), mit einer auf ein Wickelrohr (4) aufwickelbaren Rollobahn (5),
bei welchem eine Spiralfeder (7) spannbar innerhalb des Wickelrohres (4) angeordnet wird, wobei ein Ende (8) der Spiralfeder (7) drehfest mit dem Wickelrohr (4) verbunden wird und das andere Ende (8) der Spiralfeder (7) drehbar in dem Wickelrohr (4) aufgenommen wird, und bei welchem das Wickelrohr (4) in einem Gehäuse (6) um seine Längsachse (10) drehbar an zwei Endstücken (9) des Gehäuses (6) gelagert wird,
wobei ein erstes Endstück (9) dem drehbaren Ende (8) der Spiralfeder (7) zugewandt ist und ein zweites Endstück (9) dem drehfesten Ende (8) der Spiralfeder (7) zugewandt ist, **dadurch gekennzeichnet, dass** die Spiralfeder (7) mittels einer Spannvorrichtung (11) von außen durch das erste Endstück (9) des Gehäuses (6) hindurch vorgespannt wird
und dass nach dem Vorspannen der Spannvorrichtung (11) zum Fixieren der Vorspannung der Spiralfeder (7) an dem ersten Endstück (9) des Gehäuses (6) festgelegt wird, insbesondere formschlüssig festgelegt wird.

12. Verfahren nach dem vorhergehenden Anspruch, **dadurch gekennzeichnet, dass** die Spannvorrichtung (11) einen Drehstab (12) umfasst, welcher mittels eines Bajonettverschlusses an dem ersten Endstück (9) des Gehäuses (6) festgelegt wird.

13. Verfahren nach einem der vorhergehenden Verfahrensansprüche, **dadurch gekennzeichnet, dass** zum Vorspannen der Spiralfeder (7) ein Spannabschnitt (16) des Drehstabes (12) mit einer ersten Mitnehmerkontur (17) von außen durch das erste Endstück (9) des Gehäuses (6) hindurch mit einer zweiten Mitnehmerkontur (18) des drehbaren Endes (8) der Spiralfeder (7) in Eingriff gebracht wird, insbesondere in axialer Richtung der Spiralfeder (7) in wenigstens eine die zweite Mitnehmerkontur (18) ausbildende Windung (19) der Spiralfeder (7) eingeschoben wird.

14. Verfahren nach einem der vorhergehenden Verfahrensansprüche, **dadurch gekennzeichnet, dass** an den Spannabschnitt (16) des Drehstabs (12) mehrere Rastnasen (20) zum Verrasten der wenigstens einen, die zweite Mitnehmerkontur (18) ausbildenden Windung (19) der Spiralfeder (7) angeformt werden.

15. Verfahren nach einem der vorhergehenden Verfahrensansprüche, **dadurch gekennzeichnet, dass** zur Ausbildung einer Lagerstelle (22) für einen ersten Lagerstopfen (23) des Wickelrohres (4) eine Metallbuchse (24) in ein Spritzgusswerkzeug eingelegt wird und die Metallbuchse (24) in einem einzigen Arbeitsschritt direkt mit dem Drehstab (12) vergossen wird.
